# EUROPÄISCHE PATENTSCHRIFT

(11) **EP 4 200 056 B1**
(45) Veröffentlichungstag und Bekanntmachung des Hinweises auf die Patenterteilung: **01.05.2024**
(21) Anmeldenummer: 21769365.4
(22) Anmeldetag: 23.08.2021
(51) Int. Cl.: B01D 46/00, B01D 46/24

(54) **FILTERELEMENT UND FILTERSYSTEM**
FILTER ELEMENT AND FILTER SYSTEM
ÉLÉMENT FILTRANT ET SYSTÈME DE FILTRAGE

(30) Priorität: 24.08.2020 DE 102020122024
(43) Veröffentlichungstag der Anmeldung: 28.06.2023
(73) Patentinhaber: MANN+HUMMEL GmbH, 71636 Ludwigsburg (DE)
(72) Erfinder: STARK, Dennis, 69256 Mauer (DE); KAUFMANN, Michael, 67149 Meckenheim (DE); RUHLAND, Klaus-Dieter, 67149 Meckenheim (DE)
(74) Vertreter: Mann + Hummel Intellectual Property
(86) Internationale Anmeldenummer: PCT/EP2021/073281
(87) Internationale Veröffentlichungsnummer: WO 2022/043264

(56) Entgegenhaltungen:
- EP-A1- 3 546 048
- DE-U1-202007 018 072
- US-A1- 2018 361 292
- US-A1- 2018 372 036
- US-A1- 2020 001 221

## Beschreibung

### Technisches Gebiet

Die vorliegende Erfindung betrifft ein Filtersystem mit einem Filterelement.

### Stand der Technik

Ein Filtersystem, beispielsweise ein Luftfiltersystem, umfasst ein Filtergehäuse und ein entnehmbar in dem Filtergehäuse aufgenommenes Filterelement. Ein derartiges Filterelement kann ein gefaltetes Filtermedium aufweisen, das zwischen zwei Endscheiben platziert und fest mit diesen verbunden ist. Zumindest eine der Endscheiben kann ein Dichtungselement aufweisen, mit dessen Hilfe das Filterelement gegenüber dem Filtergehäuse abdichtbar ist. Ferner kann diese Endscheibe auch eine Kontur aufweisen, in welche eine entsprechende Gegenkontur des Filtergehäuses formschlüssig eingreifen kann. Hierdurch ist gewährleistet, dass nur zu dem Filtersystem passende Filterelemente in das Filtergehäuse eingebaut werden können. Das heißt, Filterelemente ohne eine derartige passende Kontur sind nicht in das Filtergehäuse einbaubar.

WO 2012/172019 A1 zeigt ein Luftfiltersystem umfassend ein Gehäuse mit einem Gehäuseoberteil und ein Luftfilterelement zum Filtern von Luft. Das Gehäuse umfasst einen Reinluftstutzen zur Ableitung von Reinluft aus dem Gehäuse und eine Dichtungsaufnahme zum formschlüssigen Verbinden mit einer zylindrischen Dichtung des Luftfilterelements und zum Halten des Luftfilterelements, wobei die Dichtungsaufnahme eine zylindrische, sich von dem Gehäuseoberteil in den Innenräum des Gehäuses hineinerstreckende Dichtfläche aufweist, die den Reinluftstutzen umschließt und an welche die Dichtung des Luftfilterelements radial anlegbar ist, wobei an der Dichtfläche eine radial über die Dichtfläche hinausragende, ringförmige Auskragung angeordnet ist, welche von der Dichtung des Luftfilterelements formschlüssig umgreifbar ist.

EP 3 546 048 A1 beschreibt ein Luftfiltersystem und ein Verfahren zum Austausch eines Luftfilterelements. Ein Mittelrohr wird hierbei in einem Gehäuse positioniert, an welchem wiederum das Luftfilterelement befestigt wird. Eine Dichtung dichtet das Luftfilterelement gegen das Mittelrohr ab.

### Offenbarung der Erfindung

Vor diesem Hintergrund liegt der vorliegenden Erfindung die Aufgabe zugrunde, ein verbessertes Filtersystem anzugeben.

Demgemäß wird ein Filtersystem mit einem Filtergehäuse und einem Filterelement vorgeschlagen. Das Filterelement umfasst ein Filtermedium, eine mit dem Filtermedium verbundene erste Endscheibe und eine mit dem Filtermedium verbundene zweite Endscheibe, wobei das Filtermedium zwischen der ersten Endscheibe und der zweiten Endscheibe angeordnet ist, wobei die erste Endscheibe dem Filtermedium abgewandt einen Positionier- und Dichtabschnitt umfasst, wobei der Positionier- und Dichtabschnitt außenseitig Positionierausnehmungen umfasst, welche dazu eingerichtet sind, dass Störgeometrien eines Filtergehäuses des Filtersystems formschlüssig in die Positionierausnehmungen eingreifen, um das Filterelement umfänglich gegenüber dem Filtergehäuse zu positionieren, wobei der Positionier- und Dichtabschnitt innenseitig eine Schnittstelle umfasst, welche dazu eingerichtet ist, das Filterelement radial gegenüber dem Filtergehäuse abzudichten und axial gegenüber dem Filtergehäuse zu positionieren, wobei sich die Schnittstelle entlang einer Längsrichtung des Filterelements, welche von der ersten Endscheibe in Richtung der zweiten Endscheibe orientiert ist, betrachtet, weiter in den Positionier- und Dichtabschnitt hinein erstreckt als die Positionierausnehmungen, wobei die Schnittstelle eine Dichtnut in Form einer Ringnut umfasst, welche vollständig um eine Symmetrieachse des Filterelements umläuft, wobei die Dichtnut dazu eingerichtet ist, dass eine Dichtrippe des Filtergehäuses formschlüssig in die Dichtnut eingreift, um das Filterelement axial gegenüber dem Filtergehäuse zu positionieren, wobei das Filtergehäuse Störgeometrien umfasst, welche formschlüssig in die Positionierausnehmungen des Filterelements eingreifen, wobei das Filtergehäuse eine Dichtfläche umfasst, mit welcher die Schnittstelle des Filterelements zumindest abschnittsweise radial verpresst ist, und wobei eine jeweilige Stirnfläche der Störgeometrien entlang der Längsrichtung betrachtet nach der Dichtfläche des Filtergehäuses angeordnet ist.

Dadurch, dass sich die Schnittstelle weiter in den Positionier- und Dichtabschnitt hinein erstreckt als die Positionierausnehmungen, kann erreicht werden, dass eine sich über die Störgeometrien in der Längsrichtung hinaus erstreckende Schnittstelle des Filtergehäuses an der Schnittstelle des Filterelements geführt werden kann. Dadurch ist das Filterelement an dem Filtergehäuse geführt, wenn das Filterelement gegenüber dem Filtergehäuse verdreht wird, um dieses bezüglich des Filtergehäuses zu positionieren.

Das Filterelement ist bevorzugt ein Luftfilterelement. Das Filterelement ist insbesondere dazu geeignet, einem Druckluftkompressor zugeführte Luft zu reinigen. Das Filtermedium ist vorzugsweise gefaltet. Das Filtermedium bildet insbesondere einen umfänglich geschlossenen Faltenbalg aus. Die Endscheiben sind vorzugsweise aus einem Kunststoffmaterial gefertigt. Beispielsweise sind die Endscheiben stirnseitig an das Filtermedium angeschäumt oder angegossen. Vorzugsweise sind sowohl die erste Endscheibe als auch die zweite Endscheibe fest mit dem Filtermedium verbunden. Das Filterelement ist vorzugsweise rotationssymmetrisch zu einer Mittel- oder Symmetrieachse aufgebaut. Auch die Endscheiben sind insbesondere rotationssymmetrisch zu dieser Symmetrieachse aufgebaut. Das Filterelement kann jedoch im Querschnitt auch eine ovale Geometrie aufweisen. In diesem Fall ist das Filterelement nicht rotationssymmetrisch zu der Symmetrieachse aufgebaut.

Der Positionier- und Dichtabschnitt kann alternativ auch an der zweiten Endscheibe vorgesehen sein. Der Positionier- und Dichtabschnitt ist einstückig, insbesondere materialeinstückig, mit der ersten Endscheibe ausgebildet. "Einstückig" oder "einteilig" bedeutet vorliegend, dass die erste Endscheibe und der Positionier- und Dichtabschnitt ein gemeinsames Bauteil bilden und nicht aus unterschiedlichen Bauteilen zusammengesetzt sind. "Materialeinstückig" bedeutet vorliegend, dass die erste Endscheibe und der Positionier- und Dichtabschnitt durchgehend aus demselben Material gefertigt sind.

Der Positionier- und Dichtabschnitt erstreckt sich stirnseitig aus einer dem Filtermedium abgewandten Stirnfläche der ersten Endscheibe heraus. Der Positionier- und Dichtabschnitt ist rotationssymmetrisch zu der Symmetrieachse aufgebaut und läuft vollständig um diese um. Der Positionier- und Dichtabschnitt ist somit bevorzugt ringförmig. Die Anzahl der Positionierausnehmungen ist beliebig. Dass die Positionierausnehmungen "außenseitig" an dem Positionier- und Dichtabschnitt angeordnet sind, bedeutet vorliegend, dass die Positionierausnehmungen von der Symmetrieachse wegweisen.

Eine formschlüssige Verbindung entsteht durch das Ineinander- oder Hintergreifen von zwei Verbindungspartnern, vorliegend den Störgeometrien des Filtergehäuses und den Positionierausnehmungen des Filterelements. Dabei greifen die Störgeometrien in einem montierten Zustand des Filterelements formschlüssig in die Positionierausnehmungen ein, so dass das Filterelement gegenüber dem Filtergehäuse nicht verdrehbar ist. Solange die Störgeometrien noch nicht in die Positionierausnehmungen eingreifen, ist es möglich, das Filterelement gegenüber dem Filtergehäuse zu verdrehen. Das Filterelement kann dabei so lange gegenüber dem Gehäuse verdreht werden, bis die Positionierausnehmungen mit den korrespondierenden Störgeometrien fluchten, so dass die Störgeometrien in die Positionierausnehmungen eingreifen.

Sobald die Störgeometrien in die Positionierausnehmungen eingreifen, kann das Filterelement in einer Einführrichtung, die vorzugsweise entgegengesetzt zu der Längsrichtung des Filterelements orientiert ist, in das Filtergehäuse eingeschoben werden. Hierdurch dichtet die Schnittstelle des Filterelements gegenüber dem Filtergehäuse ab. Das Filtergehäuse weist bevorzugt eine zu der Schnittstelle des Filterelements korrespondierende Schnittstelle auf. Dass die Positionierausnehmungen geeignet sind, das Filterelement "umfänglich" gegenüber dem Filtergehäuse zu positionieren, bedeutet demnach vorliegend, dass dann, wenn die Störgeometrien in die Positionierausnehmungen eingreifen, ein Verdrehen des Filterelements gegenüber dem Filtergehäuse nicht mehr möglich ist.

Dass die Schnittstelle "innenseitig" an dem Positionier- und Dichtabschnitt angeordnet ist, bedeutet vorliegend, dass die Schnittstelle der Symmetrieachse zugewandt angeordnet ist. Vorzugsweise ist die Schnittstelle zylinderförmig. Die Schnittstelle läuft vorzugsweise vollständig um die Symmetrieachse um. Die Schnittstelle ist zumindest abschnittsweise federelastisch verformbar, damit diese gegenüber dem Filtergehäuse radial verpresst werden kann. "Radial" bedeutet dabei entlang einer Radialrichtung, die senkrecht zu der Symmetrieachse orientiert ist und von dieser wegweist. Zum Abdichten des Filterelements gegenüber dem Filtergehäuse wird die Schnittstelle zumindest abschnittsweise radial verpresst und dabei federelastisch verformt.

Darunter, dass die Schnittstelle geeignet ist, das Filterelement "axial" gegenüber dem Filtergehäuse zu positionieren, ist vorliegend insbesondere zu verstehen, dass mit Hilfe der Schnittstelle eine Festlegung oder Positionierung des Filterelements entlang der Längsrichtung bzw. entlang der Einführrichtung möglich ist. Hierzu kann das Filtergehäuse beispielsweise formschlüssig in die Schnittstelle eingreifen. Dass sich die Schnittlinie entlang der Längsrichtung betrachtet weiter in den Positionier- und Dichtabschnitt hinein erstreckt als die Positionierausnehmungen, bedeutet vorliegend, dass die Schnittstelle bezüglich einer umlaufenden Stirnfläche des Positionier- und Dichtabschnitts eine größere Tiefe aufweist als die Positionierausnehmungen.

In Ausführungsformen umfasst die Schnittstelle eine umlaufende Dichtfläche, welche dazu eingerichtet ist, das Filterelement radial gegenüber dem Filtergehäuse abzudichten, wobei die Dichtnut entlang der Längsrichtung betrachtet nach der Dichtfläche angeordnet ist. Das heißt, die Dichtrippe greift erst dann in die Dichtnut ein, wenn die Dichtfläche des Filterelements gegenüber einer Dichtfläche des Filtergehäuses verpresst wird. Die Dichtfläche weist vorzugsweise eine kreiszylinderförmige Geometrie auf, die vollständig um die Symmetrieachse umläuft. Bei dem radialen Abdichten des Filterelements gegenüber dem Filtergehäuse wird die Dichtfläche verpresst, wodurch sich der Positionier- und Dichtabschnitt zumindest abschnittsweise verformt. Die Dichtnut ist insbesondere eine Ringnut, welche vollständig um die Symmetrieachse umläuft. Die Dichtnut ist entlang der Längsrichtung betrachtet neben der Dichtfläche angeordnet. Das heißt, die Dichtnut und die Dichtfläche sind benachbart zueinander platziert.

In Ausführungsformen umfasst die Schnittstelle eine umlaufende Fläche, welche derart positioniert ist, dass die Dichtnut entlang der Längsrichtung betrachtet zwischen der Dichtfläche und der Fläche angeordnet ist, wobei sich die Fläche entlang der Längsrichtung betrachtet, weiter in den Positionier- und Dichtabschnitt hinein erstreckt als die Positionierausnehmungen. Die Fläche läuft vollständig um die Symmetrieachse um und weist bevorzugt eine kreiszylinderförmige Geometrie auf. In einem montierten Zustand des Filterelements ist die Fläche vorzugsweise nicht mit dem Filtergehäuse in Kontakt. Das heißt, zwischen dem Filtergehäuse und der Fläche ist ein Spalt, insbesondere ein Luftspalt, vorgesehen.

In Ausführungsformen weist die Fläche einen größeren Durchmesser als die Dichtfläche auf. Das heißt insbesondere, dass sich die Fläche in der Radialrichtung betrachtet weiter in den Positionier- und Dichtabschnitt hineinerstreckt als die Dichtfläche.

In Ausführungsformen erstrecken sich die Positionierausnehmungen entlang der Längsrichtung betrachtet weiter in den Positionier- und Dichtabschnitt hinein als die Dichtfläche. Das heißt, dass die Positionierausnehmungen entlang der Längsrichtung betrachtet eine größere Tiefe aufweisen als die Dichtfläche. Mit anderen Worten endet die Dichtfläche entlang der Längsrichtung betrachtet vor den Positionierausnehmungen.

In Ausführungsformen ist die erste Endscheibe offen und die zweite Endscheibe geschlossen. Umgekehrt kann auch die erste Endscheibe geschlossen und die zweite Endscheibe offen sein. Ferner können auch beide Endscheiben offen sein. "Offen" bedeutet vorliegend, dass die jeweilige Endscheibe einen Durchbruch, insbesondere eine Ausströmöffnung, aufweist, durch welchen ein Fluid, beispielsweise Luft, aus einem Innenraum des Filterelements herausströmen kann. Der Durchbruch ist vorzugsweise rotationssymmetrisch zu der Symmetrieachse aufgebaut.

In Ausführungsformen sind die Positionierausnehmungen gleichmäßig oder ungleichmäßig um einen Umfang des Filterelements herum verteilt angeordnet. Insbesondere sind die Positionierausnehmungen gleichmäßig oder ungleichmäßig um die Symmetrieachse herum verteilt angeordnet. "Gleichmäßig" bedeutet vorliegend, dass Umfangswinkel zwischen den einzelnen Positionierausnehmungen bzw. Abstände zwischen den einzelnen Positionierausnehmungen konstant oder identisch sind. "Ungleichmäßig" bedeutet vorliegend, dass Umfangwinkel zwischen den einzelnen Positionierausnehmungen bzw. Abstände zwischen den einzelnen Positionierausnehmungen unterschiedlich groß sind. Die Anzahl der Positionierausnehmungen ist beliebig. Beispielsweise sind zumindest drei Positionierausnehmungen vorgesehen. Es können jedoch auch vier Positionierausnehmungen, fünf Positionierausnehmungen, sechs Positionierausnehmungen oder mehr als sechs Positionierausnehmungen vorgesehen sein.

Ferner umfasst das Filtergehäuse Störgeometrien, welche formschlüssig in die Positionierausnehmungen des Filterelements eingreifen, wobei das Filtergehäuse eine Dichtfläche umfasst, mit welcher die Schnittstelle des Filterelements zumindest abschnittsweise radial verpresst ist, und wobei eine jeweilige Stirnfläche der Störgeometrien entlang der Längsrichtung betrachtet nach der Dichtfläche des Filtergehäuses angeordnet ist.

Das heißt, die Stirnfläche der Störgeometrie eilt der Dichtfläche des Filtergehäuses voraus. Mit anderen Worten gerät das Filterelement bei einem Einbau in das Filtergehäuse zunächst mit der Stirnfläche der Störgeometrien in Kontakt, bevor die Schnittstelle des Filterelements gegenüber der Dichtfläche des Filtergehäuses abdichtet. Das Filtergehäuse weist vorzugsweise ein Gehäuseunterteil sowie ein Gehäuseoberteil auf, die voneinander trennbar sind, um das Filterelement auszutauschen. Das Gehäuseunterteil ist insbesondere topfförmig und weist einen Bodenabschnitt sowie einen einteilig mit dem Bodenabschnitt verbundenen hohlzylinderförmigen Basisabschnitt auf. An dem Bodenabschnitt ist die Schnittstelle des Gehäuseunterteils vorgesehen, welche die Dichtfläche des Filtergehäuses aufweist. Die Schnittstelle des Filterelements ist geeignet, mit der Schnittstelle des Filtergehäuses derart zusammenzuwirken, dass das Filterelement gegenüber dem Filtergehäuse abgedichtet und relativ zu diesem positioniert wird. Auch die Störgeometrien sind vorzugsweise an dem Bodenabschnitt vorgesehen. Das Gehäuseunterteil weist ferner einen seitlich angeordneten Fluideinlass sowie einen an dem Bodenabschnitt angeordneten Fluidauslass auf. Der Fluideinlass ist vorzugsweise senkrecht zu der Symmetrieachse angeordnet. Der Fluidauslass hingegen ist vorzugsweise rotationssymmetrisch zu der Symmetrieachse aufgebaut.

In Ausführungsformen gerät der Positionier- und Dichtabschnitt des Filterelements bei einem Einbau desselben in das Filtergehäuse stirnseitig zuerst mit den Störgeometrien in Kontakt, wobei die Störgeometrien mit Hilfe eines Rotierens des Filterelements gegenüber dem Filtergehäuse in formschlüssigem Eingriff mit den Positionierausnehmungen bringbar sind. Das heißt, dass das Filterelement zunächst in der Einführrichtung in das Filtergehäuse, insbesondere das Filtergehäuseunterteil, eingeführt wird, bis der Positionier- und Dichtabschnitt auf den Störgeometrien aufliegt. Durch ein Verdrehen des Filterelements gegenüber dem Filtergehäuse können nun die Positionierausnehmungen in Eingriff mit den Störgeometrien geraten, so dass das Filterelement weiter in das Gehäuseunterteil einschiebbar ist, um das Filterelement gegenüber dem Filtergehäuse abzudichten.

In Ausführungsformen gerät eine Dichtfläche der Schnittstelle des Filterelements bei dem Einbau des Filterelements in das Filtergehäuse erst dann mit der Dichtfläche des Filtergehäuses in Kontakt, wenn die Störgeometrien in formschlüssigem Eingriff mit den Positionierausnehmungen sind. Das heißt, das Filterelement kann, wie zuvor erwähnt, nur dann weiter in das Filtergehäuse eingeschoben werden, wenn die Störgeometrien mit den Positionierausnehmungen fluchten.

In Ausführungsformen weisen die Störgeometrien entlang der Längsrichtung betrachtet eine größere Tiefe als die Dichtfläche der Schnittstelle auf. Die Tiefe ist insbesondere bemessen als ein Abstand einer Stirnfläche des Positionier- und Dichtabschnitts zu einer Stirnfläche der ersten Endscheibe.

In Ausführungsformen umfasst das Filtergehäuse eine Dichtrippe, welche formschlüssig in eine Dichtnut der Schnittstelle des Filterelements eingreift, wobei die Dichtrippe entlang der Längsrichtung betrachtet, nach der Dichtfläche des Filtergehäuses angeordnet ist. Die Dichtrippe ist ringförmig und läuft vollständig um die Symmetrieachse um. Dadurch, dass die Dichtrippe entlang der Längsrichtung betrachtet nach der Dichtfläche des Filtergehäuses angeordnet ist, greift die Dichtrippe erst dann in die Dichtnut ein, wenn die Dichtfläche der Schnittstelle des Filterelements an der Dichtfläche der Schnittstelle des Filtergehäuses anliegt und gegenüber dieser radial verpresst ist.

In Ausführungsformen umfasst das Filtergehäuse eine Zentrierfläche, wobei die Zentrierfläche entlang der Längsrichtung betrachtet, nach der Dichtrippe des Filtergehäuses angeordnet ist. Die Zentrierfläche ist vorzugsweise kreiszylinderförmig und läuft vollständig um die Symmetrieachse um. An der Zentrierfläche wird die Dichtfläche der Schnittstelle des Filterelements geführt, solange die Störgeometrien noch nicht in die Positionierausnehmungen des Positionier- und Dichtabschnitts des Filterelements eingreifen, das heißt, solange der Positionier- und Dichtabschnitt stirnseitig auf den Störgeometrien aufliegt und das Filterelement gegenüber dem Filtergehäuse verdrehbar ist.

In Ausführungsformen ist zwischen der Zentrierfläche des Filtergehäuses und der Schnittstelle des Filterelements in einem in das Filtergehäuse eingebauten Zustand des Filterelements ein umlaufender Spalt vorgesehen. Der Spalt ist insbesondere ein Luftspalt. In dem eingebauten Zustand des Filterelements greifen die Störgeometrien formschlüssig in die Positionierausnehmungen ein, so dass die Dichtfläche des Filterelements mit der Dichtfläche des Filtergehäuses radial verpresst ist.

In Ausführungsformen sind die Störgeometrien gleichmäßig oder ungleichmäßig um einen Umfang des Filtergehäuses verteilt angeordnet. Die Anzahl der Störgeometrien ist beliebig. Beispielsweise sind drei oder fünf derartige Störgeometrien vorgesehen. "Gleichmäßig" bedeutet vorliegend, dass ein Umfangswinkel bzw. Abstand zwischen den einzelnen Störgeometrien konstant ist. "Ungleichmäßig" bedeutet vorliegend, dass der Umfangwinkel bzw. Abstand zwischen den einzelnen Störgeometrien ungleichmäßig ist.

### Kurze Beschreibung der Zeichnungen

Es zeigt dabei:
- Fig. 1:: eine schematische Aufsicht einer Ausführungsform eines Filtersystems;
- Fig. 2:: eine weitere schematische Aufsicht des Filtersystems gemäß Fig. 1;
- Fig. 3:: eine schematische Schnittansicht des Filtersystems gemäß der Schnittlinie III-III der Fig. 1;
- Fig. 4:: eine weitere schematische Schnittansicht des Filtersystems gemäß der Schnittlinie IV-IV der Fig. 2;
- Fig. 5:: eine weitere schematische Schnittansicht des Filtersystems gemäß der Schnittlinie IV-IV der Fig. 2;
- Fig. 6:: eine weitere schematische Schnittansicht des Filtersystems gemäß der Schnittlinie IV-IV der Fig. 2;
- Fig. 7:: die Detailansicht VII gemäß Fig. 3;
- Fig. 8:: die Detailansicht IIX gemäß Fig. 6;
- Fig. 9:: eine schematische perspektivische Ansicht einer Ausführungsform eines Filtergehäuses für das Filtersystem gemäß Fig. 1;
- Fig. 10:: eine schematische perspektivische Ansicht einer Ausführungsform eines Filterelements für das Filtersystem gemäß Fig. 1; und
- Fig. 11:: eine schematische Seitenansicht des Filterelements gemäß Fig. 10.

In den Figuren sind gleiche oder funktionsgleiche Elemente, sofern nichts anderes angegeben ist, mit denselben Bezugszeichen versehen worden.

### Ausführungsform(en) der Erfindung

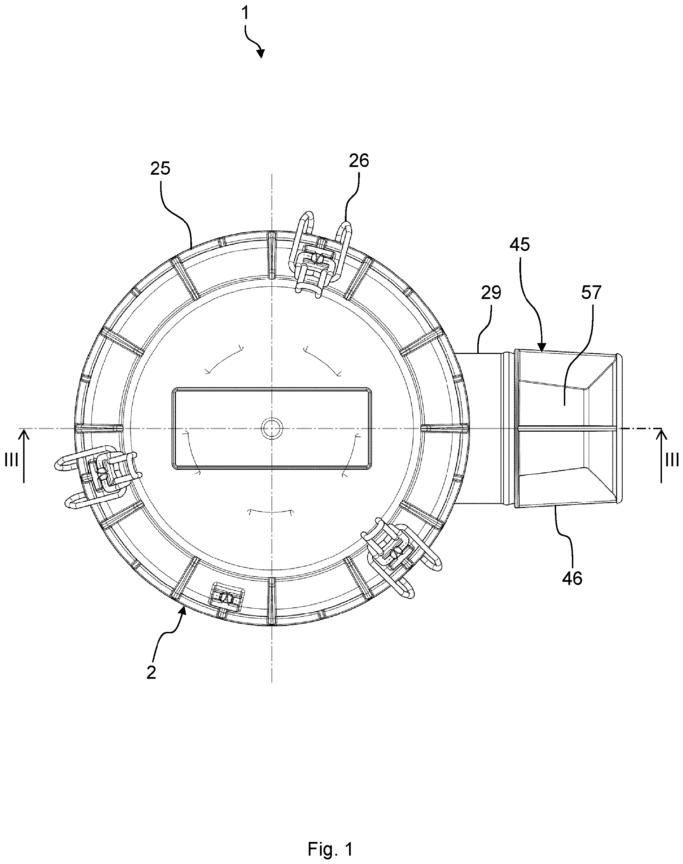

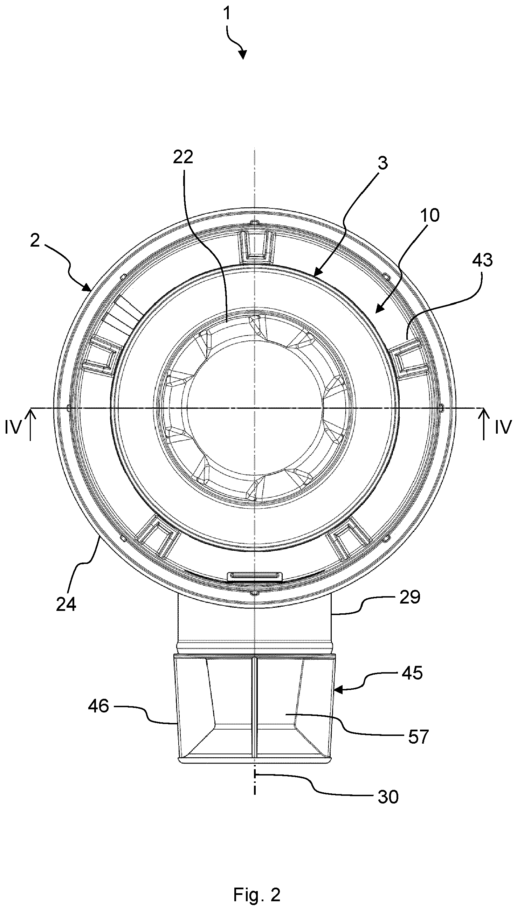

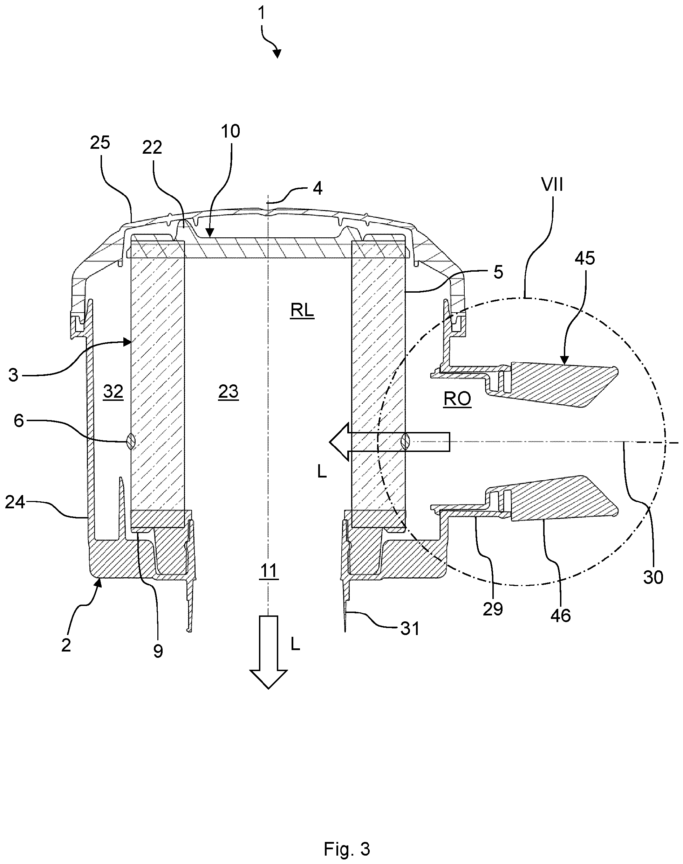

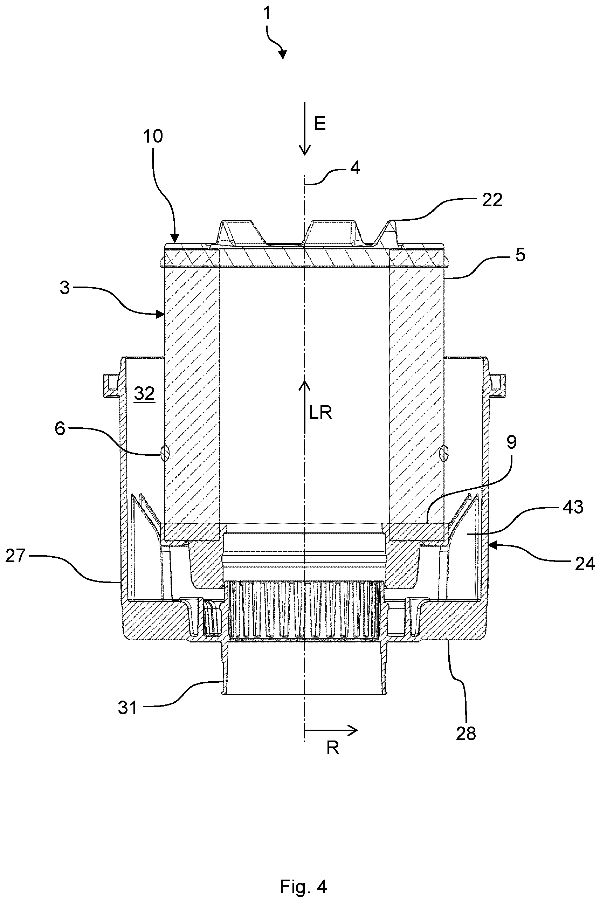

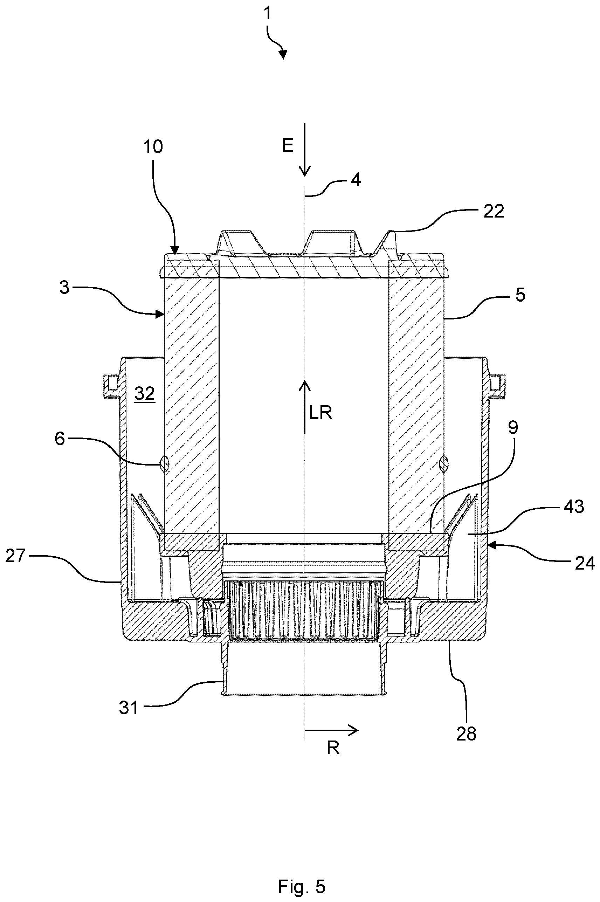

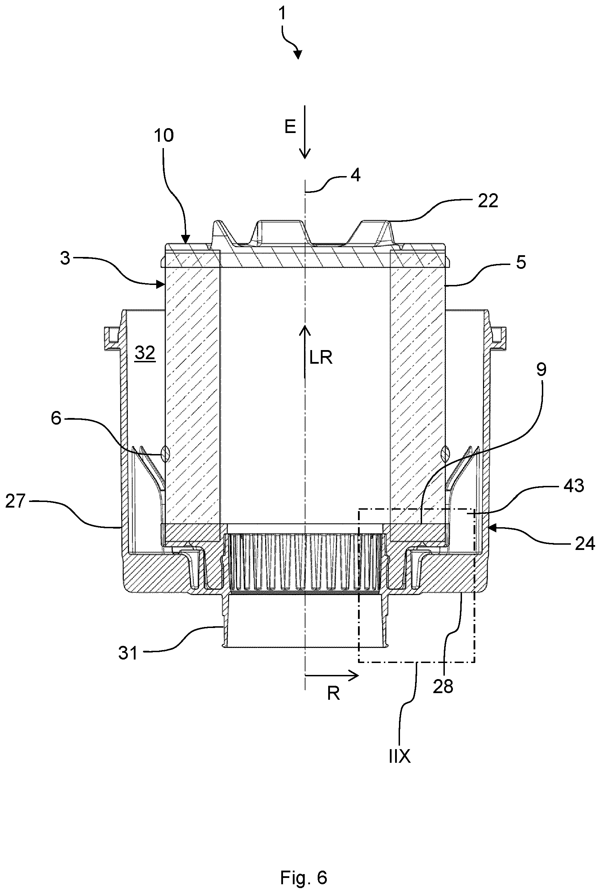

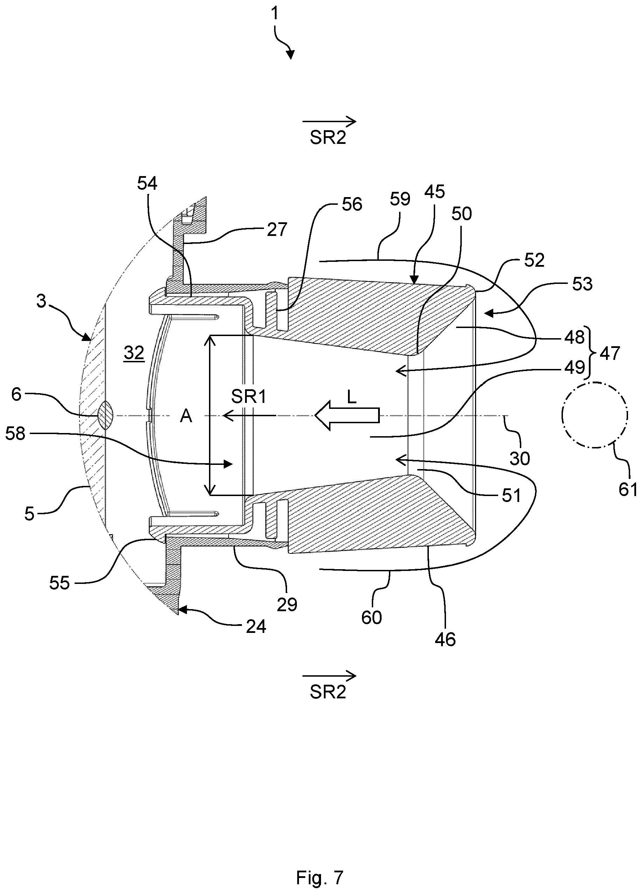

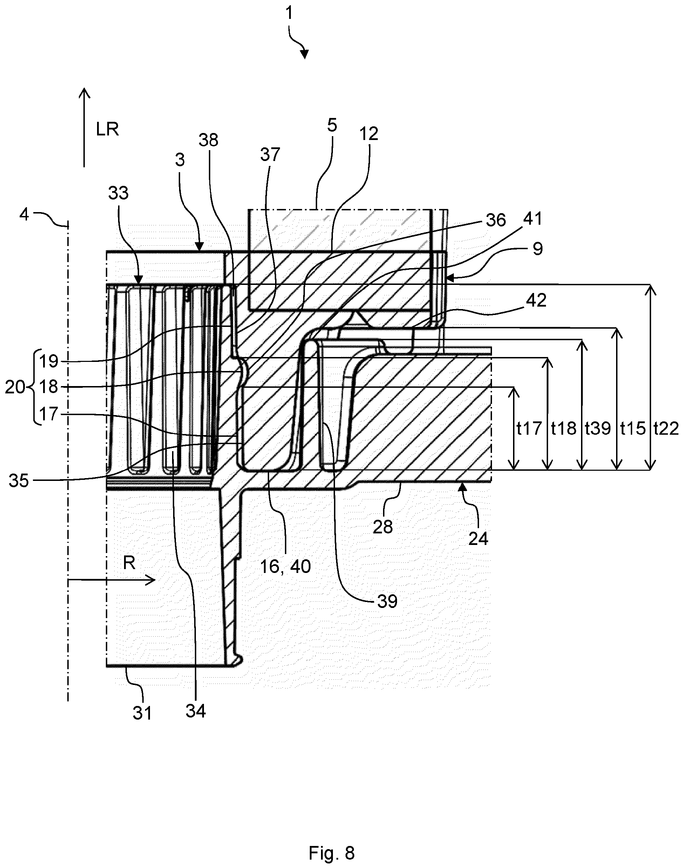

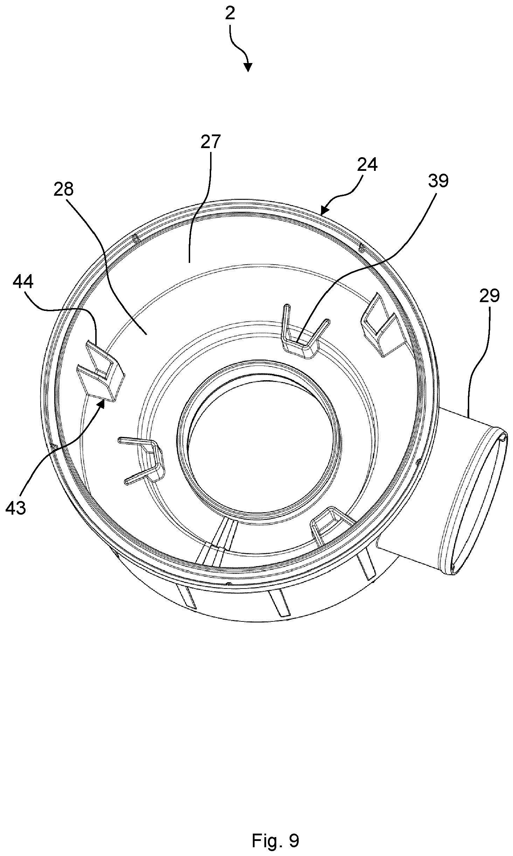

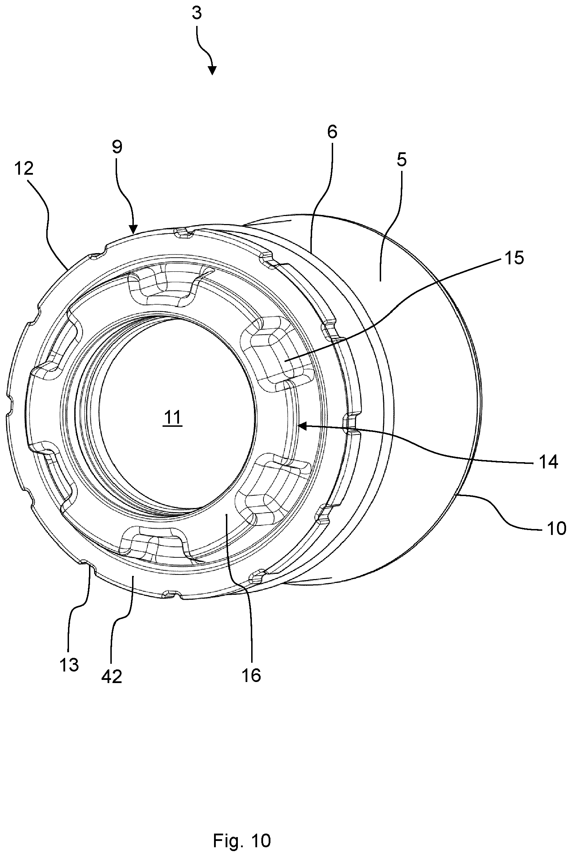

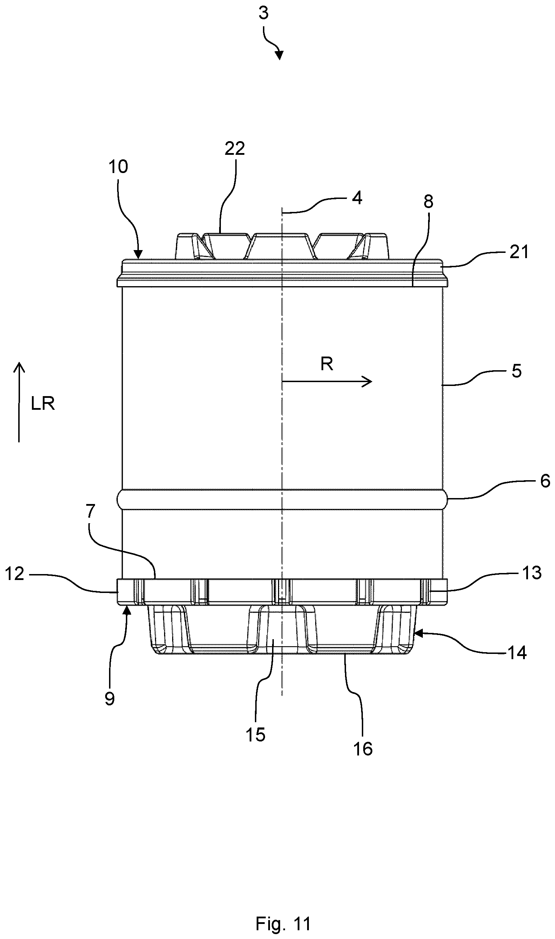

Fig. 1 zeigt eine schematische Aufsicht einer Ausführungsform eines Filtersystems 1. Fig. 2 zeigt eine weitere schematische Aufsicht des Filtersystems 1. Fig. 3 zeigt eine schematische Schnittansicht des Filtersystems 1 gemäß der Schnittlinie III-III der Fig. 1. Fig. 4 zeigt eine weitere schematische Schnittansicht des Filtersystems 1 gemäß der Schnittlinie IV-IV der Fig. 2. Fig. 5 zeigt eine weitere schematische Schnittansicht des Filtersystems 1 gemäß der Schnittlinie IV-IV der Fig. 2. Fig. 5 zeigt eine weitere schematische Schnittansicht des Filtersystems 1 gemäß der Schnittlinie IV-IV der Fig. 2. Fig. 6 zeigt eine weitere schematische Schnittansicht des Filtersystems 1 gemäß der Schnittlinie IV-IV der Fig. 2. Fig. 7 zeigt die Detailansicht VII gemäß Fig. 3. Fig. 8 zeigt die Detailansicht IIX gemäß Fig. 6. Fig. 9 zeigt eine schematische perspektivische Ansicht einer Ausführungsform eines Filtergehäuses 2 für das Filtersystem 1. Fig. 10 zeigt eine schematische perspektivische Ansicht einer Ausführungsform eines Filterelements 3 für das Filtersystem 1. Fig. 11 zeigt eine schematische Seitenansicht des Filterelements 3. Nachfolgend wird auf Fig. 1 bis 11 gleichzeitig Bezug genommen.

Das Filtersystem 1 kann auch als Filteranordnung bezeichnet werden. Das Filtersystem 1 findet vorzugsweise als Ansaugluftfilter für Druckluftkompressoren Anwendung. Alternativ kann das Filtersystem 1 jedoch auch als Ansaugluftfilter für Brennkraftmaschinen, beispielsweise in Kraftfahrzeugen, Lastkraftwagen, Baufahrzeugen, Wasserfahrzeugen, Schienenfahrzeugen, landwirtschaftlichen Maschinen bzw. Fahrzeugen oder Luftfahrzeugen Anwendung finden. Das Filtersystem 1 kann auch bei immobilen Anwendungen, beispielsweise in der Gebäudetechnik, Anwendung finden. Das Filterelement 3 ist insbesondere dazu geeignet, Ansaugluft eines Druckluftkompressors zu filtern. Vorzugsweise ist das Filterelement 3 ein Luftfilterelement.

Das Filterelement 3 ist rotationssymmetrisch zu einer Mittel- oder Symmetrieachse 4 aufgebaut. Das Filterelement 3 umfasst ein Filtermedium 5, das zylinderförmig ist. Das Filtermedium 5 ist rotationssymmetrisch zu der Symmetrieachse 4 aufgebaut. Beispielsweise kann das Filtermedium 5 ringförmig geschlossen sein und in Form eines sternförmig gefalteten Filterbalges vorliegen. Das Filtermedium 5 ist somit vorzugsweise gefaltet.

Das gefaltete Filtermedium 5 kann zur Stabilisierung desselben mit einem Stabilisierungsring 6 versehen sein. Der Stabilisierungsring 6 kann auch als Fixierwickel bezeichnet werden. Der Stabilisierungsring 6 ist beispielsweise ein auf das Filtermedium 5 aufgeklebtes Band oder eine aufgeklebte Schnur. Der Stabilisierungsring 6 kann eine um die Symmetrieachse 4 vollständig um das Filtermedium 5 umlaufende Klebstoffraupe oder Leimraupe oder dergleichen sein. Insbesondere kann der Stabilisierungsring 6 einen Schmelzklebstoff und/oder schmelzklebstoffgetränkte Fäden, beispielsweise zumindest drei derartige Fäden, aufweisen. Der Stabilisierungsring 6 dient dazu, Falten des gefalteten Filtermediums 5 zu stabilisieren und so deren Abstand zueinander gleich zu halten. Der Stabilisierungsring 6 ist entlang einer Längsrichtung LR des Filterelements 3 betrachtet außermittig an dem Filtermedium 5 platziert.

Dabei ist die Längsrichtung LR entlang der Symmetrieachse 4 orientiert. In der Orientierung der Fig. 11 kann die Längsrichtung LR von unten nach oben orientiert sein. Die Längsrichtung LR kann jedoch auch umgekehrt orientiert sein. Der Stabilisierungsring 6 ist dabei außenseitig an dem Filtermedium 5 vorgesehen. "Außermittig" bedeutet vorliegend, dass der Stabilisierungsring 6 bezüglich einer ersten Stirnseite 7 und einer zweiten Stirnseite 8 des gefalteten Filtermediums 5 nicht mittig zwischen den beiden Stirnseiten 7, 8 angeordnet ist, sondern beispielsweise näher an der ersten Stirnseite 7 platziert ist als an der zweiten Stirnseite 8. Insbesondere ist genau ein ringförmig vollständig um die Symmetrieachse 4 umlaufender Stabilisierungsring 6 vorgesehen.

Das Filtermedium 5 ist beispielsweise ein Filterpapier, Filtergewebe, Filtergelege oder ein Filtervlies. Insbesondere kann das Filtermedium 5 in einem Spinnvlies- oder Meltblown-Verfahren hergestellt sein oder eine derartige, auf einem Vlies- oder Celluloseträger aufgebrachte Faserlage umfassen. Weiter kann das Filtermedium 5 verfilzt oder vernadelt sein. Das Filtermedium 5 kann Naturfasern, wie Cellulose oder Baumwolle, oder Kunstfasern, beispielsweise aus Polyester, Polyvinylsulfit oder Polytetrafluorethylen, aufweisen. Fasern des Filtermediums 5 können bei der Verarbeitung in, schräg und/oder quer oder ungeordnet zu einer Maschinenrichtung orientiert sein.

Das Filterelement 3 weist eine erste, insbesondere offene, Endscheibe 9 auf, die an der ersten Stirnseite 7 des Filtermediums 5 vorgesehen ist. Ferner umfasst das Filterelement 3 eine zweite, insbesondere geschlossene, Endscheibe 10, welche an der zweiten Stirnseite 8 des Filtermediums 5 vorgesehen ist. Das heißt, das Filtermedium 5 ist zwischen der ersten Endscheibe 9 und der zweiten Endscheibe 10 platziert. Die Endscheiben 9, 10 können beispielsweise aus einem, insbesondere in Gießschalen gegossenen, bevorzugt geschäumten, Polyurethanmaterial gefertigt sein. Die Endscheiben 9, 10 können an das Filtermedium 5 angegossen sein. Die erste Endscheibe 9 ist mit der ersten Stirnseite 7 verbunden. Die zweite Endscheibe 10 ist mit der zweiten Stirnseite 8 verbunden.

Die erste Endscheibe 9 umfasst einen mittig angeordneten Durchbruch 11. Der Durchbruch 11 kann eine Ausströmöffnung des Filterelements 3 sein. Die erste Endscheibe 9 umfasst einen plattenförmigen Basisabschnitt 12, welcher mit der ersten Stirnseite 7 des Filterelements 3 verbunden ist. Der Durchbruch 11 durchbricht den Basisabschnitt 12. Außenseitig an dem Basisabschnitt 12 kann eine Vielzahl an Nuten oder Ausnehmungen 13 vorgesehen sein, welche gleichmäßig um die Symmetrieachse 4 herum verteilt angeordnet sind.

Der ersten Stirnseite 7 des Filtermediums 5 abgewandt erstreckt sich ein ringförmig um die Symmetrieachse 4 umlaufender Positionier- und Dichtabschnitt 14 der ersten Endscheibe 9 aus dem Basisabschnitt 12 heraus. Mit Hilfe des Positionier- und Dichtabschnitts 14 kann das Filterelement 3 in dem Filtergehäuse 2 positioniert und gegenüber diesem abgedichtet werden wie nachfolgend noch erläutert wird. Der Durchbruch 11 durchbricht auch den Positionier- und Dichtabschnitt 14.

Außenseitig, das heißt dem Durchbruch 11 abgewandt, ist an dem Positionier- und Dichtabschnitt 14 eine Vielzahl an Positionierausnehmungen 15 vorgesehen, von denen in Fig. 10 und 11 jeweils lediglich eine mit einem Bezugszeichen versehen ist. Die Positionierausnehmungen 15 sind gleichmäßig um die Symmetrieachse 4 herum verteilt angeordnet. Beispielsweise sind sechs derartige Positionierausnehmungen 15 vorgesehen. Die Anzahl der Positionierausnehmungen 15 ist jedoch beliebig. Ausgehend von einer ringförmigen Stirnfläche 16 des Positionier- und Dichtabschnitts 14 weisen die Positionierausnehmungen 15 entlang der Symmetrieachse 4 bzw. entlang der Längsrichtung LR betrachtet eine Tiefe t15 auf (Fig. 8). Die Positionierausnehmungen 15 erstrecken sich von der Stirnfläche 16 ausgehend in Richtung des Basisabschnitts 12.

Wie Fig. 8 weiterhin zeigt, weist die erste Endscheibe 9 bzw. der Positionier- und Dichtabschnitt 14 innenseitig, das heißt dem Durchbruch 11 zugewandt, eine zylinderförmige Dichtfläche 17 auf, welche rotationssymmetrisch zu der Symmetrieachse 4 aufgebaut ist und vollständig um diese umläuft. Die Dichtfläche 17 ist geeignet, mit dem Filtergehäuse 2 wechselzuwirken, um so die erste Endscheibe 9 gegenüber dem Filtergehäuse 2 fluiddicht abzudichten. Hierbei kann die Dichtfläche 17 radial verpresst werden. "Radial" bedeutet dabei in Richtung einer Radialrichtung R, die senkrecht zu der Symmetrieachse 4 orientiert ist und von dieser wegweist.

Die Dichtfläche 17 erstreckt sich ausgehend von der Stirnfläche 16 entlang der Längsrichtung LR um eine Tiefe t17 in den Durchbruch 11 hinein. An die Dichtfläche 17 schließt sich eine ringförmig um die Symmetrieachse 4 umlaufende Ringnut oder Dichtnut 18 an. Ausgehend von der Stirnfläche 16 entlang der Längsrichtung LR endet die Dichtnut 18 in einer Tiefe t18. Dabei ist die Tiefe t18 kleiner als die Tiefe t15. Die Tiefe t17 ist kleiner als die Tiefe t15. Entlang der Längsrichtung LR betrachtet schließt sich an die Dichtnut 18 eine um die Symmetrieachse 4 umlaufende zylinderförmige Fläche 19 an. Bezüglich der Radialrichtung R betrachtet weist die Dichtfläche 17 einen kleineren Durchmesser auf als die Fläche 19. Die Dichtfläche 17, Dichtnut 18 und die Fläche 19 bilden eine Dichtungsschnittstelle oder Schnittstelle 20 des Filterelements 3. Die Schnittstelle 20 kann auch als erste Schnittstelle oder als Filterelementschnittstelle bezeichnet werden. Die Schnittstelle 20 ist geeignet, mit dem Filtergehäuse 2 wechselzuwirken. Die Schnittstelle 20 weist ausgehend von der Stirnfläche 16 des Positionier- und Dichtabschnitts 14 eine Tiefe t20 auf. Die Schnittstelle 20 kann auch die Positionierausnehmungen 15 umfassen.

Nun zurückkehrend zu Fig. 11 weist zweite Endscheibe 10 einen plattenförmigen Basisabschnitt 21 auf, welcher rotationssymmetrisch zu der Symmetrieachse 4 aufgebaut ist und die zweite Stirnseite 8 des Filtermediums 5 fluiddicht verschließt. Der zweiten Stirnseite 8 abgewandt erstrecken sich aus dem Basisabschnitt 21 heraus Positionierelemente 22, von denen in Fig. 11 nur eines mit einem Bezugszeichen versehen ist. Die Anzahl der Positionierelemente 22 ist beliebig. Beispielsweise können fünf derartige Positionierelemente 22 vorgesehen sein, welche gleichmä-βig um die Symmetrieachse 4 herum verteilt angeordnet sind.

Die Funktion des Filterelements 3 wird nachfolgend anhand Fig. 3 erläutert. Zu reinigendes Fluid L, beispielsweise Luft, tritt von einer Rohseite RO des Filterelements 3 durch das Filtermedium 5 hindurch zu einer von dem Filtermedium 5 umgebenen Reinseite RL des Filterelements 3. Das heißt, das Fluid L strömt durch das Filtermedium 5 hindurch in einem von dem Filtermedium 5 umgebenen Innenraum 23 des Filterelements 3. Aus dem Filterelement 3 strömt das gereinigte Fluid L durch den Durchbruch 11 der ersten Endscheibe 9 als gefiltertes Fluid L aus.

Nun zurückkehrend zu dem Filtergehäuse 2 umfasst dieses ein Gehäuseunterteil 24 und ein Gehäuseoberteil 25. Das Gehäuseoberteil 25 kann auch als Gehäusedeckel bezeichnet werden. Das Gehäuseoberteil 25 ist zum Wechsel des Filterelements 3 von dem Gehäuseunterteil 24 demontierbar und wieder an diesem montierbar. Zwischen dem Gehäuseunterteil 24 und dem Gehäuseoberteil 25 kann ein Dichtelement, beispielsweise in Form eines O-Rings, vorgesehen sein. Das Gehäuseoberteil 25 kann Schnellverschlüsse 26, von denen in Fig. 1 nur einer mit einem Bezugszeichen versehen ist, aufweisen. Die Anzahl der Schnellverschlüsse 26 ist beliebig. Beispielsweise sind drei derartige Schnellverschlüsse 26 vorgesehen, die gleichmäßig um die Symmetrieachse 4 herum verteilt angeordnet sind.

Mit Hilfe der Schnellverschlüsse 26 kann das Gehäuseoberteil 25 lösbar mit dem Gehäuseunterteil 24 verbunden werden. Hierzu können an dem Gehäuseunterteil 24 Eingriffsabschnitte, beispielsweise in Form von Haken oder Absätzen, vorgesehen sein, in welche die Schnellverschlüsse 26 zum Verbinden des Gehäuseoberteils 25 mit dem Gehäuseunterteil 24 formschlüssig eingreifen. Eine formschlüssige Verbindung entsteht durch das Ineinander- oder Hintergreifen von mindestens zwei Verbindungspartnern, vorliegend den Schnellverschlüssen 26 und den Eingriffsabschnitten. Das Gehäuseoberteil 25 umfasst ferner Eingriffsabschnitte, welche mit den Positionierelementen 22 der zweiten Endscheibe 10 des Filterelements 3 derart wechselwirken können, dass die Positionierelemente 22 formschlüssig in die Eingriffsabschnitte des Gehäuseoberteils 25 eingreifen. Beispielsweise ist das Gehäuseoberteil 25 ein Kunststoffspritzgussbauteil.

Das Gehäuseunterteil 24 ist topfförmig ausgebildet und umfasst einen zylinderförmigen Basisabschnitt 27, welcher rotationssymmetrisch zu der Symmetrieachse 4 aufgebaut ist. Stirnseitig ist der Basisabschnitt 27 mit Hilfe eines Bodenabschnitts 28 verschlossen. Der Basisabschnitt 27 und der Bodenabschnitt 28 sind einteilig, insbesondere materialeinstückig, ausgebildet. "Einteilig" oder "einstückig" bedeutet vorliegend, dass der Basisabschnitt 27 und Bodenabschnitt 28 ein gemeinsames Bauteil bilden und nicht aus unterschiedlichen Einzelbauteilen zusammengesetzt sind. "Materialeinstückig" bedeutet vorliegend, dass der Basisabschnitt 27 und der Bodenabschnitt 28 durchgehend aus dem gleichen Material gefertigt sind. Beispielsweise ist das Gehäuseunterteil 24 ein Kunststoffspritzgussbauteil.

Das Gehäuseunterteil 24 umfasst einen Fluideinlass 29, der rohrförmig ausgebildet ist. Der Fluideinlass 29 ist rotationssymmetrisch zu einer Mittel- oder Symmetrieachse 30 aufgebaut. Die Symmetrieachse 30 ist senkrecht zu der Symmetrieachse 4 platziert. Durch den Fluideinlass 29 kann dem Filterelement 3 rohseitig das zu reinigende Fluid L zugeführt werden. Ferner umfasst das Gehäuseunterteil 24 einen Fluidauslass 31, der an dem Bodenabschnitt 28 vorgesehen ist. Der Fluidauslass 31 ist rohrförmig und rotationssymmetrisch zu der Symmetrieachse 4 aufgebaut. Durch den Fluidauslass 31 kann das gereinigte Fluid L von dem Filterelement 3 abgeführt werden.

Der Fluidauslass 31 erstreckt sich ausgehend von dem Bodenabschnitt 28 des Gehäuseunterteils 24 nach außen in Richtung von dem Filterelement 3 weg. Ferner erstreckt sich als Verlängerung des Fluidauslasses 31 in einen Innenraum 32 (Fig. 3 bis 6) des Gehäuseunterteils eine rohrförmige Schnittstelle 33 (Fig. 8) hinein, welche mit der Schnittstelle 20 des Filterelements 3 wechselwirkt, um das Filterelement 3 gegenüber dem Gehäuseunterteil 24 abzudichten. Die Schnittstelle 33 ist rohrförmig aufgebaut und rotationssymmetrisch zu der Symmetrieachse 4 ausgebildet. Die Schnittstelle 33 kann auch als zweite Schnittstelle oder als Filtergehäuseschnittstelle bezeichnet werden.

Innenseitig an der Schnittstelle 33, das heißt der Schnittstelle 20 des Filterelements 3 abgewandt, ist an der Schnittstelle 33 eine Störkontur 34 vorgesehen. Die Störkontur 34 ist beispielsweise als eine Vielzahl entlang der Längsrichtung LR verlaufender Nuten ausgebildet. Die Störkontur 34 verhindert, dass ein nicht zu dem Filtersystem 1 gehörendes Filterelement an der Schnittstelle 33 montiert werden kann, welches innenseitig gegenüber der Schnittstelle 33 radial abdichten würde.

Die Schnittstelle 33 erstreckt sich, wie zuvor erwähnt, aus dem Bodenabschnitt 28 in den Innenraum 32 des Gehäuseunterteils 24 hinein. Dabei umfasst die Schnittstelle 33 eine zylinderförmige und rotationssymmetrisch zu der Symmetrieachse 4 aufgebaute Dichtfläche 35, welche mit der Dichtfläche 17 des Filterelements 3 wechselwirkt. Insbesondere sind die Dichtflächen 17, 35 in der Radialrichtung R betrachtet radial miteinander verpresst.

Entlang der Längsrichtung LR betrachtet schließt sich an die Dichtfläche 35 eine ringförmig um die Symmetrieachse 4 umlaufende Nase oder Dichtrippe 36 an. Die Dichtrippe 36 ist dazu geeignet, in die Dichtnut 18 der Schnittstelle 20 formschlüssig einzugreifen. In der Längsrichtung LR betrachtet nach der Dichtrippe 36 ist eine zylinderförmige Zentrierfläche 37 vorgesehen. Die Zentrierfläche 37 ist geeignet, die Dichtfläche 17 des Filterelements 3 bei dem Einbau desselben in das Gehäuseunterteil 24 bezüglich der Symmetrieachse 4 zu zentrieren bzw. zu führen. Zwischen der Fläche 19 und Zentrierfläche 37 ist ein Spalt 38, insbesondere ein Luftspalt, vorgesehen.

Wie Fig. 9 zeigt, sind an dem Bodenabschnitt 28 des Gehäuseunterteils 24 Störgeometrien 39 vorgesehen, von denen in Fig. 9 nur eine mit einem Bezugszeichen versehen ist. Beispielsweise sind drei oder fünf derartige Störgeometrien 39 vorgesehen, die gleichmäßig um die Symmetrieachse 4 herum verteilt angeordnet sind. Die Anzahl der Störgeometrien 39 ist beliebig. Die Störgeometrien 39 sind dazu geeignet, formschlüssig in die Positionierausnehmungen 15 der ersten Endscheibe 9 einzugreifen. Die Störgeometrien 39 ragen ausgehend von dem Bodenabschnitt 28 in den Innenraum 32 hinein. Die Störgeometrien 39 verhindern ferner den Einbau eines nicht zu dem Filtersystem 1 passenden Filterelements ohne Positionierausnehmungen 15 in das Gehäuseunterteil 24.

Von einer Stirnfläche 40 (Fig. 8) des Bodenabschnitts 28, an der die Stirnfläche 16 anliegt, aus gesehen weist jede Störgeometrie 39 entlang der Längsrichtung LR betrachtet eine Tiefe t39 auf. Dabei ist die Tiefe t39 größer als die Tiefe t18 und kleiner als die Tiefe t15. Jede Störgeometrie 39 umfasst eine Stirnfläche 41, die parallel zu der Stirnfläche 40 orientiert und beabstandet von dieser angeordnet ist. Der Basisabschnitt 12 der ersten Endscheibe 9 umfasst eine Stirnfläche 42. Die Stirnflächen 41, 42 sind parallel zueinander und beabstandet voneinander positioniert.

In dem Gehäuseunterteil 24 sind ferner Zentriergeometrien 43 angeformt, von denen in Fig. 2 und 9 jeweils nur eine mit einem Bezugszeichen versehen ist. Es können beispielsweise drei oder fünf derartige Zentriergeometrien 43 vorgesehen sein, die gleichmäßig um die Symmetrieachse 4 herum verteilt angeordnet sind. Jede Zentriergeometrie 43 umfasst eine schräg zu der Symmetrieachse 4 geneigte Oberkante 44.

Der Einbau des Filterelements 3 in das Filtergehäuse 2 wird nachfolgend anhand Fig. 4 bis 6 und 8 erläutert. Zunächst wird das Filterelement 3 in einer Einführrichtung E, die entlang der Symmetrieachse 4 orientiert ist, in das Gehäuseunterteil 24 eingeschoben. Die Einführrichtung E ist dabei von der zweiten Endscheibe 10 in Richtung der ersten Endscheibe 9 orientiert. Die Längsrichtung LR und die Einführrichtung E können gegensätzlich orientiert sein. Dabei erfolgt eine Vorzentrierung des Filterelements 3 mit Hilfe des plattenförmigen Basisabschnitts 12 der ersten Endscheibe 9 an den Zentriergeometrien 43. Mit Hilfe der Zentriergeometrien 43 wird das Filterelement 3 bezüglich der Symmetrieachse 4 zentriert, so dass die Stirnfläche 16 des Positionier- und Dichtabschnitts 14 der ersten Endscheibe 9 auf den Stirnflächen 41 der Störgeometrien 39 aufliegt (Fig. 5). Das heißt, die Schnittstellen 20, 33 sind noch nicht in Eingriff miteinander.

Aus der in Fig. 5 gezeigten Position kann das Filterelement 3 nun um die Symmetrieachse 4 rotiert werden, bis die Störgeometrien 39 mit den Positionierausnehmungen 15 des Positionier- und Dichtabschnitts 14 fluchten, so dass das Filterelement 3 entlang der Einführrichtung E weiter in das Gehäuseunterteil 24 eingedrückt werden kann. Bei dem Verdrehen des Filterelements 3 um die Symmetrieachse 4 wird die Dichtfläche 17 der ersten Endscheibe 9 an der Zentrierfläche 37 der Schnittstelle 33 geführt und bezüglich der Symmetrieachse 4 zentriert. Sobald die Störgeometrien 39 in die Positionierausnehmungen 15 eingreifen, wird der Positionier- und Dichtabschnitt 14 derart elastisch verformt, dass die Dichtrippe 36 in die Dichtnut 18 formschlüssig eingreift. Gleichzeitig werden die Dichtflächen 17, 35 radial gegeneinander verpresst. Die Stirnflächen 16, 40 liegen aneinander an. Das Filterelement 3 ist in dem Gehäuseunterteil 24 montiert.

Das Filtersystem 1 umfasst weiterhin einen Schalldämpfer 45 (Fig. 1 bis 3 und 7), welcher an dem Fluideinlass 29 angebracht ist. Der Schalldämpfer 45 ist vorzugsweise ein einteiliges, insbesondere ein materialeinstückiges, Kunststoffbauteil. Der Schalldämpfer 45 kann ein Kunststoffspritzgussbauteil sein. Der Schalldämpfer 45 ist rotationssymmetrisch zu der Symmetrieachse 30 aufgebaut. Der Schalldämpfer 45 weist außenseitig eine Vielzahl an Fluidführungsrippen 46 auf, die parallel zu der Symmetrieachse 30 verlaufen. Die Fluidführungsrippen 46 sind außenseitig an einem rohrförmigen Basiskörper 47 des Schalldämpfers 45 vorgesehen. Durch den Schalldämpfer 45 hindurch wird dem Filterelement 3 das zu reinigende Fluid L zugeführt.

Der Basiskörper 47 weist einen kegelstumpfförmig geformten Einlass 48 sowie einen ebenfalls kegelstumpfförmig geformten Auslass 49 auf. Der Einlass 48 und Auslass 49 sind miteinander in Fluidverbindung. Der Einlass 48 und Auslass 49 sind dabei derart angeordnet, dass die kegelstumpfförmigen Geometrien derart positioniert sind, dass sich zwischen dem Einlass 48 und Auslass 49 eine mit einer Verrundung 50 verrundete Querschnittsverengung 51 ergibt. Der Einlass 48 ist dem Fluideinlass 29 abgewandt. Der Auslass 49 ist dem Fluideinlass 29 zugewandt. Der Einlass 48 und Auslass 49 bilden zusammen somit eine sanduhrförmige oder trompetenförmige Geometrie. Der Auslass 49 weist einen Anströmquerschnitt A des Fluideinlasses auf. Mit dem Anströmquerschnitt A wird das Filtermedium 5 angeströmt.

An dem Einlass 48 ist ferner eine Einlassverrundung 52 vorgesehen, die vollständig um die Symmetrieachse 30 umläuft. Die Einlassverrundung 52 läuft vollständig um eine Einlassöffnung 53 des Basiskörpers 47 um. Der Basiskörper 47 geht in einen rohrförmigen Befestigungsabschnitt 54 über. Der Befestigungsabschnitt 54 kann Schnapphaken 55 aufweisen, mit deren Hilfe der Schalldämpfer 45 mit dem Fluideinlass 29 formschlüssig verbunden ist. Zwischen dem Befestigungsabschnitt 54 und Basiskörper 47 ist eine vollständig um die Symmetrieachse 30 umlaufende Rippe 56 vorgesehen. Die Rippe 56 ist dabei senkrecht zu der Symmetrieachse 4 angeordnet. Die Rippe 56 ist in dem Fluideinlass 29 aufgenommen. Die Fluidführungsrippen 46 sind an einer Außenseite 57 (Fig. 1 und 2) des Basiskörpers 47 vorgesehen. Der Auslass 49 weist eine Auslassöffnung 58 auf. Ein Durchmesser der Auslassöffnung 58 ist kleiner als ein Durchmesser der Einlassöffnung 53.

Im Betrieb des Filtersystems 1 wird das zu filternde Fluid L um die Einlassverrundung 52 herum seitlich in die Einlassöffnung 53 und somit in den Einlass 48 eingesaugt, wie in Fig. 7 mit Hilfe von Pfeilen 59, 60 angedeutet. Das Fluid L strömt somit entlang der Fluidführungsrippen 46, die das Fluid dem Einlass 48 zuleiten. Durch den Basiskörper 47 strömt das Fluid L entlang einer, insbesondere ersten, Strömungsrichtung SR1. Die Strömungsrichtung SR1 ist von der Einlassöffnung 53 in Richtung des Filterelements 3 orientiert. Die Fluidführungsrippen 46 verlaufen entlang der oder parallel zu der Strömungsrichtung SR1.

Das Fluid L strömt außenseitig an dem Basiskörper 47 entlang der Fluidführungsrippen 46 in einer, insbesondere zweiten, Strömungsrichtung SR2. Die Strömungsrichtungen SR1, SR2 sind gegensätzlich orientiert. Die Strömungsrichtung SR2 ist entlang der Radialrichtung R orientiert. Die Strömungsrichtung SR1 hingegen ist entgegen der Radialrichtung R orientiert. Die Fluidführungsrippen 46 verlaufen auch entlang der Strömungsrichtung SR2.

Unmittelbar vor dem Einlass 48 ergibt sich ein Bereich 61, in dem das Fluid L im Wesentlichen keine Bewegung aufweist. Das heißt, das zu filternde Fluid L wird im Wesentlichen nur entlang der Fluidführungsrippen 46 in Richtung der Einlassverrundung 52 und um diese herum in den Einlass 48 eingesaugt. Das eingesaugte Fluid L prallt auf das Filtermedium 5, wobei der Stabilisierungsring 6 ein Bewegen von Falten des gefalteten Filtermediums 5 verhindert. Dabei ist der Stabilisierungsring 6 entlang der Längsrichtung LR betrachtet mittig in dem Anströmquerschnitt A des Fluideinlasses 29 platziert.

Insbesondere wird das Filtermedium 5 mit Hilfe des Stabilisierungsrings 6 vor Pulsationen geschützt. Hierdurch ergibt sich eine Geräuschreduktion. Der Stabilisierungsring 6 ist dabei bezüglich des Schalldämpfers 45 mittig angeordnet. Das heißt, die Symmetrieachse 30 verläuft bevorzugt durch den Stabilisierungsring 6 mittig hindurch. Die doppelte Konusform des Einlasses 48 und des Auslasses 49 sorgt für die Schallreduktion.

### Bezugszeichen

- 1: Filtersystem
- 2: Filtergehäuse
- 3: Filterelement
- 4: Symmetrieachse
- 5: Filtermedium
- 6: Stabilisierungsring
- 7: Stirnseite
- 8: Stirnseite
- 9: Endscheibe
- 10: Endscheibe
- 11: Durchbruch
- 12: Basisabschnitt
- 13: Ausnehmung
- 14: Positionier- und Dichtabschnitt
- 15: Positionierausnehmung
- 16: Stirnfläche
- 17: Dichtfläche
- 18: Dichtnut
- 19: Fläche
- 20: Schnittstelle
- 21: Basisabschnitt
- 22: Positionierelement
- 23: Innenraum
- 24: Gehäuseunterteil
- 25: Gehäuseoberteil
- 26: Schnellverschluss
- 27: Basisabschnitt
- 28: Bodenabschnitt
- 29: Fluideinlass
- 30: Symmetrieachse
- 31: Fluidauslass
- 32: Innenraum
- 33: Schnittstelle
- 34: Störkontur
- 35: Dichtfläche
- 36: Dichtrippe
- 37: Zentrierfläche
- 38: Spalt
- 39: Störgeometrie
- 40: Stirnfläche
- 41: Stirnfläche
- 42: Stirnfläche
- 43: Zentriergeometrie
- 44: Oberkante
- 45: Schalldämpfer
- 46: Fluidführungsrippen
- 47: Basiskörper
- 48: Einlass
- 49: Auslass
- 50: Verrundung
- 51: Querschnittsverengung
- 52: Einlassverrundung
- 53: Einlassöffnung
- 54: Befestigungsabschnitt
- 55: Schnapphaken
- 56: Rippe
- 57: Außenseite
- 58: Auslassöffnung
- 59: Pfeil
- 60: Pfeil
- 61: Bereich

- A: Anströmquerschnitt
- E: Einführrichtung
- L: Fluid
- LR: Längsrichtung
- R: Radialrichtung
- RL: Reinseite
- RO: Rohseite
- SR1: Strömungsrichtung
- SR2: Strömungsrichtung
- t15: Tiefe
- t17: Tiefe
- t18: Tiefe
- t20: Tiefe
- t39: Tiefe

## Patentansprüche

1. Filtersystem (1) mit einem Filtergehäuse (2) und einem Filterelement (3) mit einem Filtermedium (5), einer mit dem Filtermedium (5) verbundenen ersten Endscheibe (9) und einer mit dem Filtermedium (5) verbundenen zweiten Endscheibe (10), wobei das Filtermedium (5) zwischen der ersten Endscheibe (9) und der zweiten Endscheibe (10) angeordnet ist, wobei die erste Endscheibe (9) dem Filtermedium (5) abgewandt einen Positionier- und Dichtabschnitt (14) umfasst, wobei der Positionier- und Dichtabschnitt (14) außenseitig Positionierausnehmungen (15) umfasst, welche dazu eingerichtet sind, dass Störgeometrien (39) eines Filtergehäuses (2) des Filtersystems (1) formschlüssig in die Positionierausnehmungen (15) eingreifen, um das Filterelement (3) umfänglich gegenüber dem Filtergehäuse (2) zu positionieren, wobei der Positionier- und Dichtabschnitt (14) innenseitig eine Schnittstelle (20) umfasst, welche dazu eingerichtet ist, das Filterelement (3) radial gegenüber dem Filtergehäuse (2) abzudichten und axial gegenüber dem Filtergehäuse (2) zu positionieren, wobei sich die Schnittstelle (20) entlang einer Längsrichtung (LR) des Filterelements (3), welche von der ersten Endscheibe (9) in Richtung der zweiten Endscheibe (10) orientiert ist, betrachtet, weiter in den Positionier- und Dichtabschnitt (14) hineinerstreckt als die Positionierausnehmungen (15), wobei die Schnittstelle (20) eine Dichtnut (18) in Form einer Ringnut umfasst, welche vollständig um eine Symmetrieachse (4) des Filterelements (3) umläuft, wobei die Dichtnut (18) dazu eingerichtet ist, dass eine Dichtrippe (36) des Filtergehäuses (2) formschlüssig in die Dichtnut (18) eingreift, um das Filterelement (3) axial gegenüber dem Filtergehäuse (2) zu positionieren, wobei das Filtergehäuse (2) Störgeometrien (39) umfasst, welche formschlüssig in die Positionierausnehmungen (15) des Filterelements (3) eingreifen, wobei das Filtergehäuse (2) eine Dichtfläche (35) umfasst, mit welcher die Schnittstelle (20) des Filterelements (3) zumindest abschnittsweise radial verpresst ist, und wobei eine jeweilige Stirnfläche (41) der Störgeometrien (39) entlang der Längsrichtung (LR) betrachtet nach der Dichtfläche (35) des Filtergehäuses (2) angeordnet ist.

2. Filtersystem nach Anspruch 1, wobei die Schnittstelle (20) eine umlaufende Dichtfläche (17) umfasst, welche dazu eingerichtet ist, das Filterelement (3) radial gegenüber dem Filtergehäuse (2) abzudichten, und wobei die Dichtnut (18) entlang der Längsrichtung (LR) betrachtet nach der Dichtfläche (17) angeordnet ist.

3. Filtersystem nach Anspruch 2, wobei die Schnittstelle (20) eine umlaufende Fläche (19) umfasst, welche derart positioniert ist, dass die Dichtnut (18) entlang der Längsrichtung (LR) betrachtet zwischen der Dichtfläche (17) und Fläche (19) angeordnet ist, und wobei sich die Fläche (19) entlang der Längsrichtung (LR) betrachtet weiter in den Positionier- und Dichtabschnitt (14) hineinerstreckt als die Positionierausnehmungen (15).

4. Filtersystem nach Anspruch 3, wobei die Fläche (19) einen größeren Durchmesser als die Dichtfläche (17) aufweist.

5. Filtersystem nach einem der Ansprüche 2 - 4, wobei sich die Positionierausnehmungen (15) entlang der Längsrichtung (LR) betrachtet weiter in den Positionier- und Dichtabschnitt (14) hinein erstrecken als die Dichtfläche (17).

6. Filtersystem nach einem der Ansprüche 1 - 5, wobei die erste Endscheibe (9) offen und die zweite Endscheibe (10) geschlossen ist.

7. Filtersystem nach einem der Ansprüche 1 - 6, wobei die Positionierausnehmungen (15) gleichmäßig oder ungleichmäßig um einen Umfang des Filterelements (3) herum verteilt angeordnet sind.

8. Filtersystem nach einem der Ansprüche 1 - 7, wobei der Positionier- und Dichtabschnitt (14) des Filterelements (3) bei einem Einbau desselben in das Filtergehäuse (2) stirnseitig zuerst mit den Störgeometrien (39) in Kontakt gerät, und wobei die Störgeometrien (39) mit Hilfe eines Rotierens des Filterelements (3) gegenüber dem Filtergehäuse (2) in formschlüssigem Eingriff mit den Positionierausnehmungen (15) bringbar sind.

9. Filtersystem nach Anspruch 8, wobei eine Dichtfläche (17) der Schnittstelle (20) des Filterelements (3) bei dem Einbau des Filterelements (3) in das Filtergehäuse (2) erst dann mit der Dichtfläche (35) des Filtergehäuses (2) in Kontakt gerät, wenn die Störgeometrien (39) in formschlüssigem Eingriff mit den Positionierausnehmungen (15) sind.

10. Filtersystem nach Anspruch 9, wobei die Störgeometrien (39) entlang der Längsrichtung (LR) betrachtet eine größere Tiefe (t39) als die Dichtfläche (17) der Schnittstelle (20) aufweisen.

11. Filtersystem nach einem der Ansprüche 1 - 10, wobei das Filtergehäuse (2) eine Dichtrippe (36) umfasst, welche formschlüssig in eine Dichtnut (18) der Schnittstelle (20) des Filterelements (3) eingreift, und wobei die Dichtrippe (36) entlang der Längsrichtung (LR) betrachtet nach der Dichtfläche (35) des Filtergehäuses (2) angeordnet ist.

12. Filtersystem nach Anspruch 11, wobei das Filtergehäuse (2) eine Zentrierfläche (37) umfasst, und wobei die Zentrierfläche (37) entlang der Längsrichtung (LR) betrachtet nach der Dichtrippe (36) des Filtergehäuses (2) angeordnet ist.

13. Filtersystem nach Anspruch 12, wobei zwischen der Zentrierfläche (37) des Filtergehäuses (2) und der Schnittstelle (20) des Filterelements (3) in einem in das Filtergehäuse (2) eingebauten Zustand des Filterelements (3) ein umlaufender Spalt (38) vorgesehen ist.

14. Filtersystem nach einem der Ansprüche 1 - 13, wobei die Störgeometrien (39) gleichmäßig oder ungleichmäßig um einen Umfang des Filtergehäuses (2) herum verteilt angeordnet sind.

## Claims

1. A filter system (1) having a filter housing (2) and a filter element (3) with a filter medium (5), a first end disc (9) connected to the filter medium (5) and a second end disc (10) connected to the filter medium (5), wherein the filter medium (5) is disposed between the first end disc (9) and the second end disc (10), wherein the first end disc (9), facing away from the filter medium (5), comprises a positioning and sealing section (14), wherein the positioning and sealing section (14) comprises positioning recesses (15) on the exterior side, which are set up so that interfering geometries (39) of a filter housing (2) of the filter system (1) engage positively in the positioning recesses (15) in order to position the filter element (3) circumferentially with respect to the filter housing (2), wherein the positioning and sealing section (14) comprises an interface (20) on the inner side, which is set up to seal the filter element (3) radially with respect to the filter housing (2) and to position it axially with respect to the filter housing (2), wherein the interface (20), when viewed along a longitudinal direction (LR) of the filter element (3), which is oriented from the first end disc (9) towards the second end disc (10), extends further into the positioning and sealing section (14) than the positioning recesses (15), wherein the interface (20) comprises a sealing groove (18) in the shape of an annular groove, which completely extends around a symmetry axis (4) of the filter element (3), wherein the sealing groove (18) is set up so that a sealing rib (36) of the filter housing (2) engages positively in the sealing groove (18) in order to position the filter element (3) axially with respect to the filter housing (2), wherein the filter housing (2) comprises interfering geometries (39), which engage positively in the positioning recesses (15) of the filter element (3), wherein the filter housing (2) comprises a sealing surface (35) with which the interface (20) of the filter element (3) is radially compressed at least section-wise, and wherein a respective end face (41) of the interfering geometries (39), when viewed along the longitudinal direction (LR), is disposed downstream of the sealing surface (35) of the filter housing (2).

2. The filter system according to claim 1, wherein the interface (20) comprises a circumferential sealing surface (17), which is designed to seal the filter element (3) radially with respect to the filter housing (2), and wherein the sealing groove (18), when viewed along the longitudinal direction (LR), is disposed downstream of the sealing surface (17).

3. The filter system according to claim 2, wherein the interface (20) comprises a circumferential surface (19), which is positioned in such a way that the sealing groove (18), when viewed along the longitudinal direction (LR), is disposed between the sealing surface (17) and the surface (19), and wherein the surface (19), when viewed along the longitudinal direction (LR), extends further into the positioning and sealing section (14) than the positioning recesses (15).

4. The filter system according to claim 3, wherein the surface (19) features a larger diameter than the sealing surface (17).

5. The filter system according to one of the claims 2 to 4, wherein the positioning recesses (15), when viewed along the longitudinal direction (LR), extend further into the positioning and sealing section (14) than the sealing surface (17).

6. The filter system according to one of the claims 1 to 5, wherein the first end disc (9) is open and the second end disc (10) is closed.

7. The filter system according to one of the claims 1 to 6, wherein the positioning recesses (15) are disposed evenly or unevenly around a circumference of the filter element (3).

8. The filter system according to one of the claims 1 to 7, wherein the positioning and sealing section (14) of the filter element (3) first comes into contact with the interfering geometries (39) on the front face during installation of the same in the filter housing (2), and wherein the interfering geometries (39) can be brought into positive engagement with the positioning recesses (15) by rotating the filter element (3) with respect to the filter housing (2).

9. The filter system according to claim 8, wherein a sealing surface (17) of the interface (20) of the filter element (3) only comes into contact with the sealing surface (35) of the filter housing (2) during the installation of the filter element (3) in the filter housing (2) when the interfering geometries (39) are in positive engagement with the positioning recesses (15).

10. The filter system according to claim 9, wherein the interfering geometries (39), when viewed along the longitudinal direction (LR), feature a greater depth (t39) than the sealing surface (17) of the interface (20).

11. The filter system according to one of the claims 1 to 10, wherein the filter housing (2) comprises a sealing rib (36), which engages positively in a sealing groove (18) of the interface (20) of the filter element (3), and wherein the sealing rib (36), when viewed along the longitudinal direction (LR), is disposed downstream of the sealing surface (35) of the filter housing (2).

12. The filter system according to claim 11, wherein the filter housing (2) comprises a centering surface (37), and wherein the centering surface (37), when viewed along the longitudinal direction (LR), is disposed downstream of the sealing rib (36) of the filter housing (2).

13. The filter system according to claim 12, wherein a circumferential gap (38) is provided between the centering surface (37) of the filter housing (2) and the interface (20) of the filter element (3) when the filter element (3) is installed in the filter housing (2).

14. The filter system according to one of the claims 1 to 13, wherein the interfering geometries (39) are disposed evenly or unevenly around a circumference of the filter housing (2).

## Revendications

1. Système de filtre (1) ayant un boîtier de filtre (2) et un élément filtrant (3) avec un milieu filtrant (5), un premier disque d'extrémité (9) relié au milieu filtrant (5) et un deuxième disque d'extrémité (10) relié au milieu filtrant (5), dans lequel le milieu filtrant (5) est disposé entre le premier disque d'extrémité (9) et le deuxième disque d'extrémité (10), dans lequel le premier disque d'extrémité (9) comprend, détourné du milieu filtrant (5), une section de positionnement et d'étanchéité (14), dans lequel la section de positionnement et d'étanchéité (14) comprend, sur la face extérieure, des évidements de positionnement (15) qui sont conçus pour que des géométries perturbatrices (39) d'un boîtier de filtre (2) du système de filtre (1) viennent en prise par engagement positif dans les évidements de positionnement (15), afin de positionner l'élément filtrant (3) en circonférence par rapport au boîtier de filtre (2), dans lequel la section de positionnement et d'étanchéité (14) comprend, sur la face intérieure, une interface (20) qui est adaptée pour rendre l'élément filtrant (3) étanche radialement par rapport au boîtier de filtre (2) et pour le positionner axialement par rapport au boîtier de filtre (2), dans lequel interface (20) s'étend, vue le long d'une direction longitudinale (LR) de l'élément filtrant (3) orientée depuis le premier disque d'extrémité (9), en direction du deuxième disque d'extrémité (10), plus loin dans la section de positionnement et d'étanchéité (14) que les évidements de positionnement (15), dans lequel l'interface (20) comprend une rainure d'étanchéité (18) sous la forme d'une rainure annulaire, qui s'étend de manière entièrement circonférentielle autour d'un axe de symétrie (4) de l'élément filtrant (3), dans lequel la rainure d'étanchéité (18) est conçue pour qu'une nervure d'étanchéité (36) du boîtier de filtre (2) vienne en prise par engagement positif dans la rainure d'étanchéité (18) afin de positionner l'élément filtrant (3) axialement par rapport au boîtier de filtre (2), dans lequel le boîtier de filtre (2) comprend des géométries perturbatrices (39) qui viennent en prise par engagement positif dans les évidements de positionnement (15) de l'élément filtrant (3), dans lequel le boîtier de filtre (2) comprend une surface d'étanchéité (35) avec laquelle l'interface (20) de l'élément filtrant (3) est pressée radialement au moins par sections, et dans lequel une face frontale (41) respective des géométries perturbatrices (39) est disposée, vue le long de la direction longitudinale (LR), en aval de la surface d'étanchéité (35) du boîtier de filtre (2).

2. Système de filtre selon la revendication 1, dans lequel l'interface (20) comprend une surface d'étanchéité circonférentielle (17) qui est adaptée pour rendre l'élément filtrant (3) radialement étanche par rapport au boîtier de filtre (2), et dans lequel la rainure d'étanchéité (18) est disposée, vue le long de la direction longitudinale (LR), en aval de la surface d'étanchéité (17).

3. Système de filtre selon la revendication 2, dans lequel l'interface (20) comprend une surface circonférentielle (19) qui est positionnée de sorte que la rainure d'étanchéité (18) est disposée, vue le long de la direction longitudinale (LR), entre la surface d'étanchéité (17) et la surface (19) et dans lequel la surface (19) s'étend, vue le long de la direction longitudinale (LR), plus loin dans la section de positionnement et d'étanchéité (14) que les évidements de positionnement (15).

4. Système de filtre selon la revendication 3, dans lequel la surface (19) présente un diamètre supérieur à celui de la surface d'étanchéité (17).

5. Système de filtre selon l'une quelconque des revendications 2 à 4, dans lequel les évidements de positionnement (15) s'étendent, vus le long de la direction longitudinale (LR), plus loin dans la section de positionnement et d'étanchéité (14) que la surface d'étanchéité (17).

6. Système de filtre selon l'une quelconque des revendications 1 à 5, dans lequel le premier disque d'extrémité (9) est ouvert et le deuxième disque d'extrémité (10) est fermé.

7. Système de filtre selon l'une quelconque des revendications 1 à 6, dans lequel les évidements de positionnement (15) sont répartis de manière régulière ou irrégulière autour d'une circonférence de l'élément filtrant (3).

8. Système de filtre selon l'une quelconque des revendications 1 à 7, dans lequel la section de positionnement et d'étanchéité (14) de l'élément filtrant (3) entre d'abord en contact avec les géométries perturbatrices (39) lors d'une installation de ce dernier dans le boîtier de filtre (2), côté frontal, et dans lequel les géométries perturbatrices (39) peuvent être amenées par engagement positif avec les évidements de positionnement (15) à l'aide d'une rotation de l'élément filtrant (3) par rapport au boîtier de filtre (2).

9. Système de filtre selon la revendication 8, dans lequel une surface d'étanchéité (17) de l'interface (20) de l'élément filtrant (3) n'entre en contact avec la surface d'étanchéité (35) du boîtier de filtre (2) lors du montage de l'élément filtrant (3) dans le boîtier de filtre (2) que lorsque les géométries perturbatrices (39) sont en prise par engagement positif avec les évidements de positionnement (15).

10. Système de filtre selon la revendication 9, dans lequel les géométries perturbatrices (39) présentent, vues le long de la direction longitudinale (LR), une profondeur (t39) supérieure à celle de la surface d'étanchéité (17) de l'interface (20).

11. Système de filtre selon l'une quelconque des revendications 1 à 10, dans lequel le boîtier de filtre (2) comprend une nervure d'étanchéité (36) qui s'engage par engagement positif dans une rainure d'étanchéité (18) de l'interface (20) de l'élément filtrant (3), et dans lequel la nervure d'étanchéité (36) est disposée, vue le long de la direction longitudinale (LR), en aval de la surface d'étanchéité (35) du boîtier de filtre (2).

12. Système de filtre selon la revendication 11, dans lequel le boîtier de filtre (2) comprend une surface de centrage (37), et dans lequel la surface de centrage (37) est disposée, vue le long de la direction longitudinale (LR), en aval de la nervure d'étanchéité (36) du boîtier de filtre (2).

13. Système de filtre selon la revendication 12, dans lequel un espace circonférentiel (38) est prévu entre la surface de centrage (37) du boîtier de filtre (2) et l'interface (20) de l'élément filtrant (3) lorsque l'élément filtrant (3) est monté dans le boîtier de filtre (2).

14. Système de filtre selon l'une quelconque des revendications 1 à 13, dans lequel les géométries perturbatrices (39) sont répartis de manière régulière ou irrégulière autour d'une circonférence du boîtier de filtre (2).
